# EUROPEAN PATENT SPECIFICATION

(11) **EP 2 366 297 B1**
(45) Date of publication and mention of the grant of the patent: **18.12.2013**
(21) Application number: 11158625.1
(22) Date of filing: 17.03.2011
(51) Int. Cl.: A41H 43/04, D06H 5/00, B29C 65/52, A41D 27/24

(54) **Cloth bonding apparatus**
Vorrichtung zum Verbinden vom Stoff
Appareil de liaison de tissus

(30) Priority: 18.03.2010 JP 2010062225
(43) Date of publication of application: 21.09.2011
(73) Proprietor: Brother Kogyo Kabushiki Kaisha, Nagoya-shi, Aichi 467-8561 (JP)
(72) Inventor: Yamaura, Hiroki, Nagoya-shi Aichi 467-8562 (JP); Umeda, Kazutoshi, Nagoya-shi Aichi 467-8562 (JP); Enya, Tetsuji, Nagoya-shi Aichi 467-8562 (JP); Iwakoshi, Hiroyasu, Nagoya-shi Aichi 467-8562 (JP); Nishimura, Kazuto, Nagoya-shi Aichi 467-8562 (JP); Nemoto, Yoshimitsu, Nagoya-shi Aichi 467-8562 (JP); Minagawa, Yuichiro, Nagoya-shi Aichi 467-8562 (JP)
(74) Representative: Prüfer & Partner GbR European Patent Attorneys

(56) References cited:
- US-A- 2 655 980
- US-A- 2 664 938
- US-A- 2 926 723

## Description

### BACKGROUND

The present invention relates to a cloth bonding apparatus that bonds cloths with an adhesive.

The cloth bonding apparatus is directed for bonding cloths with an adhesive instead of sewing the cloths with a needle and a thread. With the bonding apparatus disclosed in Japanese Patent Application Laid-Open Publication No. 1999-512129, a liquid adhesive is discharged directly from a nozzle onto a cloth. The adhesive adheres onto the cloth. The bonding apparatus feeds the cloth on which the adhesive is applied. After placing another cloth on top of the cloth on which the adhesive is applied, a pressing portion of the bonding apparatus heats the two cloths while pressurizing the same from external surfaces. The cloths are bonded to each other with the adhesive. Since no thread is used for the bonded cloths, the surfaces of the bonded cloths have no unevenness. Thus, the cloth bonding apparatus is capable of manufacturing nice and soft clothes free from discomfort.

### SUMMARY

The nozzle is separated from the pressing portion by a predetermined distance. When an instruction of stopping a processing of bonding cloths is received, the conventional cloth bonding apparatus stops feeding the cloths in a state where the adhesive has been applied on a portion of the cloth that is positioned between the nozzle and the pressing portion. Thus, the pressing portion cannot pressurize an adhesion portion, which is the portion of the cloth on which the adhesive has been applied. The adhesive cures when it is left unpressurized. Typically, a bonding strength of an unpressurized adhesion portion is smaller than a bonding strength of a pressurized adhesion portion. Further, even if the cured adhesive is pressurized after being melted again, the bonding strength may not be sufficient depending on the nature of material of the adhesive and the cloths. Therefore, the bonding strength may partially drop when the cloths are bonded with the conventional cloth bonding apparatus.

Other apparatuses suitable for cloth bonding are known from US 2,926,723 A; US 2,664,938 A; and US 2,655,980 A.

An object of the present invention is to provide a cloth bonding apparatus capable of preventing partial drop of the bonding strength.

A cloth bonding apparatus according to the present invention includes a nozzle, a feeding portion, a discharge control portion, a pressing portion, and a first feeding control portion. The nozzle includes a discharge port through which an adhesive is dischargeable. The feeding portion is adapted to feed a cloth in a first direction relative to the nozzle. The discharge control portion starts and stops processing of discharging the adhesive through the discharge port toward the cloth. The pressing portion is located in the first direction relative to the nozzle and that is adapted to press an adhesion portion with another layer of cloth, the adhesion portion being a part of the cloth to which the adhesive discharged from the discharge port has been applied. The first feeding control portion outputs an instruction to the feeding portion when the discharge control portion has stopped the processing of discharging the adhesive thereby causing the feeding portion to feed the cloth in the first direction up to a position where the pressing portion presses a terminal portion of the adhesion portion. The cloth bonding apparatus can prevent the adhesion portion from being left unpressed. Therefore, the cloth bonding apparatus can prevent partial drop of the bonding strength.

In the cloth bonding apparatus, the feeding portion may be adapted to feed the cloth both in the first direction and a second direction relative to the nozzle, the second direction being opposite to the first direction. The cloth bonding apparatus may further comprise a second feeding control portion that, after the pressing portion has pressed the terminal portion, outputs an instruction to the feeding portion thereby causing the feeding portion to feed the cloth in the second direction up to a specified position where the adhesive discharged through the discharge port is to be applied to at least a part of a specified range including the terminal portion. In this case, the cloth bonding apparatus can resume the processing of discharging the adhesive onto the cloth from the specified position. Thus, an area where the adhesive will not be applied can be reduced so that the cloth bonding apparatus can prevent partial drop of the boning strength.

In the cloth bonding apparatus, the specified position may be separated in the first direction from a position where the adhesive discharged through the discharge port is to be applied to the terminal portion by a distance that is defined based on a size of the nozzle. The cloth bonding apparatus can resume the processing of discharging the adhesive onto the cloth from the specified position based on the part on which the adhesive has been applied in the previous processing and the size of the nozzle. The size of the nozzle is considered in order to prevent the nozzle from separating the once-bonded cloth and the other layer of cloth from each other. The area where the adhesive will not be applied can be reduced so that the cloth bonding apparatus can prevent partial drop of the bonding strength.

The cloth bonding apparatus may further comprise a storage portion and a specifying portion. The storage portion stores a plurality of combinations of conditions, the plurality of combinations of conditions each being a combination of a first feeding condition output by the first feeding control portion to the feeding portion and a second feeding conditions output by the second feeding control portion to the feeding portion. The specifying portion specifies as a specific combination one combination from among the plurality of combinations of conditions stored in the storage portion. Wherein the first feeding control portion and the second feeding control portion may respectively output instructions to the feeding portion based on the specific combination specified by the specifying portion. The cloth bonding apparatus can lessen a burden on the worker to set feeding conditions. The cloth bonding apparatus may preferably specify a combination of conditions based on conditions including at least one of a nature of a material of the cloth, a thickness of the cloth, a nature of a material of the adhesive and a discharge amount of the adhesive. In this case, the cloth bonding apparatus can more effectively prevent partial drop of the bonding strength.

### BRIEF DESCRIPTION OF THE DRAWINGS

Exemplary embodiments of the present disclosure will be described below in detail with reference to the accompanying drawings in which:
Fig. 1 is a perspective view of an entire cloth bonding apparatus 1;
Fig. 2 is a perspective view of a bonding machine 2;
Fig. 3 is a front view of the bonding machine 2;
Fig. 4 is a left side view of the bonding machine 2 in a state where a support portion 16 is in a use position;
Fig. 5 is a left side view of the bonding machine 2 in a state where the support portion 16 is in a maintenance position;
Fig. 6 is a perspective view of the internal structure of the bonding machine 2;
Fig. 7 is a cross sectional view taken along line I-I of Fig. 2;
Fig. 8 is a cross sectional view taken along line II-II of Fig. 2;
Fig. 9 is a partially enlarged perspective view of the vicinity of a nozzle 17 during a bonding operation;
Fig. 10 is a left side view of the bonding machine 2 during a bonding operation;
Fig. 11 is a block diagram showing an electric configuration of the cloth bonding apparatus 1;
Fig. 12 is an explanatory diagram of a setting table stored in a ROM 202;
Fig. 13 is an explanatory diagram of a positional relationship among the nozzle 17, a pressing portion 225 and a terminal portion 432 when a worker inputs a stop instruction;
Fig. 14 is an explanatory diagram of a positional relationship among the nozzle 17, the pressing portion 225 and the terminal portion 432 after feeding cloths according to a first feeding condition and a second feeding condition;
Fig. 15 is a flowchart of temperature control processing;
Fig. 16 is a flowchart of setting processing;
Fig. 17 is a flowchart of supply control processing; and
Fig. 18 is a flowchart of a modified supply control processing.

### DETAILED DESCRIPTION OF EXEMPLARY EMBODIMENTS

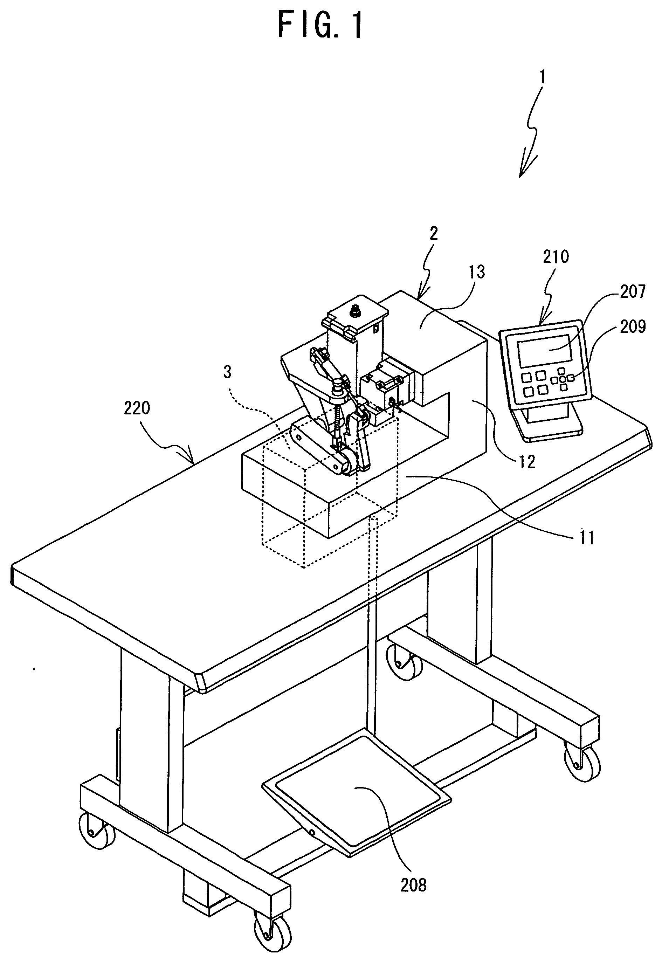

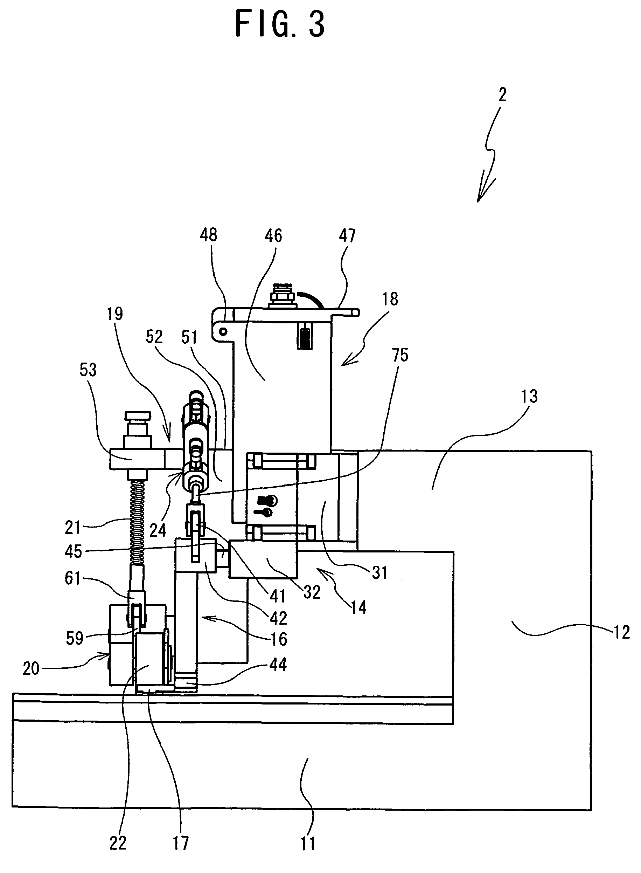

A cloth bonding apparatus 1 according to an embodiment of the present invention will be described below with reference to the drawings. A configuration of the cloth bonding apparatus 1 will be described with reference to Figs. 1 to 4. It is defined that the upper side, the lower side, the right side, the left side, the front side and the back side of Fig. 3 correspond to the upper side, the lower side, the right side, the left side, the front side and the back side of the bonding machine 2, respectively.

An overall configuration of the cloth bonding apparatus 1 will be described with reference to Fig. 1. The cloth bonding apparatus 1 includes the bonding machine 2, an operation panel 210, a pedal 208 and a control box 3. The bonding machine 2 and the operation panel 210 are fixed on a table 220. The bonding machine 2 applies an adhesive between two cloths oppositely arranged. The bonding machine 2 presses and feeds the cloths with the adhesive applied therebetween. The two cloths are bonded to each other via the above operation of the bonding machine 2. A detailed structure of the bonding machine 2 will be described later.

The operation panel 210 includes a liquid crystal display 207 and a plurality of keys 209. The liquid crystal display 207 displays various items of information thereon. The keys 209 are used for various inputs. A worker may operate the keys 209 while looking at the liquid crystal display 207, thereby to set various operations of the bonding machine 2.

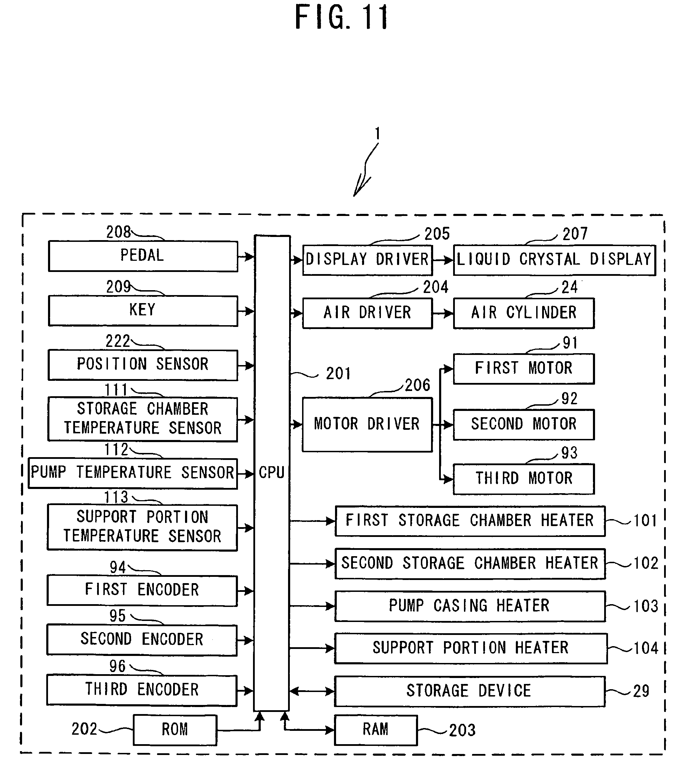

The pedal 208 is provided at a lower portion of the table 220. The worker uses the pedal 208 to adjust a cloth feed rate. The control box 3 is fixed on the lower face of the table 220. The control box 3 stores therein a control board having a CPU 201 (see Fig. 11) and the like mounted thereon. The control box 3 is electrically connected to the bonding machine 2, the operation panel 210 and the pedal 208.

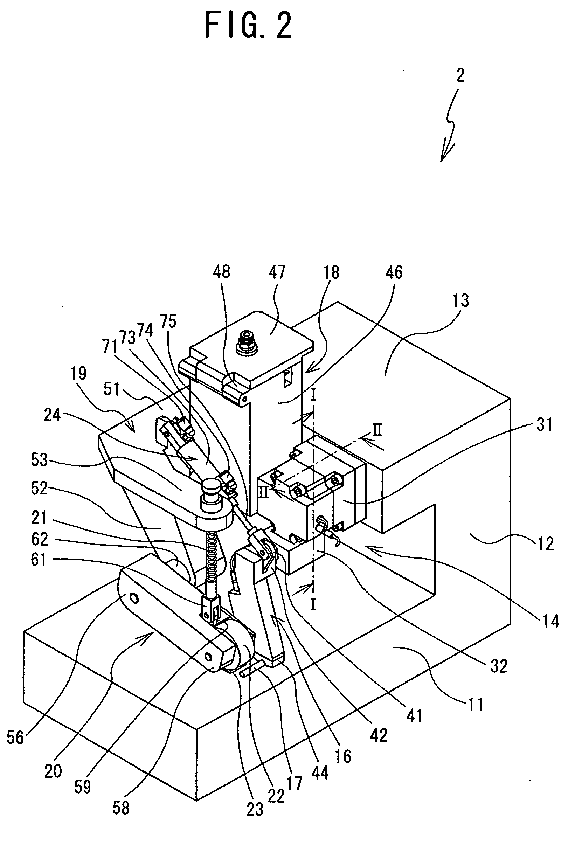

The configuration of the bonding machine 2 will be described with reference to Figs. 2 to 4. As shown in Figs. 2 and 3, the bonding machine 2 includes a bed portion 11, a pillar portion 12 and an arm portion 13. The bed portion 11 has a substantially rectangular parallelepiped shape. The pillar portion 12 extends upward from the right end of the bed portion 11. The arm portion 13 is connected to the upper end of the pillar portion 12 and projects leftward from the left side of the pillar portion 12.

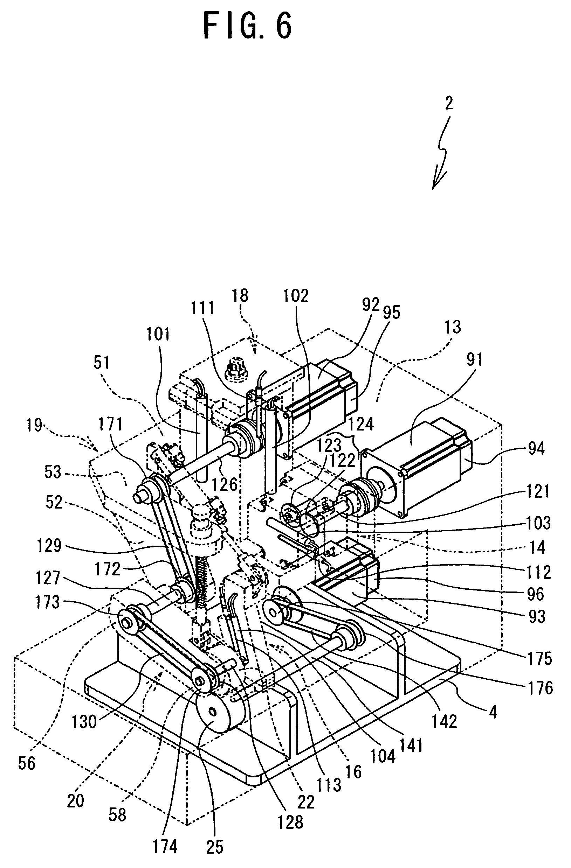

The bed portion 11 includes therein a lower feed roller 25 (see Fig. 6), a third motor 93 (see Fig. 6) and the like. The lower feed roller 25 presses and feeds the cloths together with an upper feed roller 22 described later. The third motor 93 drives the lower feed roller 25.

As shown in Fig. 2, the left end of the arm portion 13 supports a pump casing 14, a storage chamber 18 and a beam portion 19 in this order from the front. The arm portion 13 includes therein a first motor 91 (see Fig. 6), a second motor 92 (see Fig. 6) and the like.

The pump casing 14 will now be described. As shown in Figs. 2 and 3, the pump casing 14 includes a first pump casing 31 and a second pump casing 32. The first pump casing 31 is a member having a substantially rectangular parallelepiped shape. The first pump casing 31 is fixed on the left side surface of the arm portion 13. The first pump casing 31 includes therein a gear pump 124 (see Fig. 6) and the like. The gear pump 124 supplies an appropriate amount of adhesive to a nozzle 17 with high accuracy. The second pump casing 32 is a member which has a substantially rectangular parallelepiped shape. The second pump casing 32 extends downward from the lower left end of the first pump casing 31.

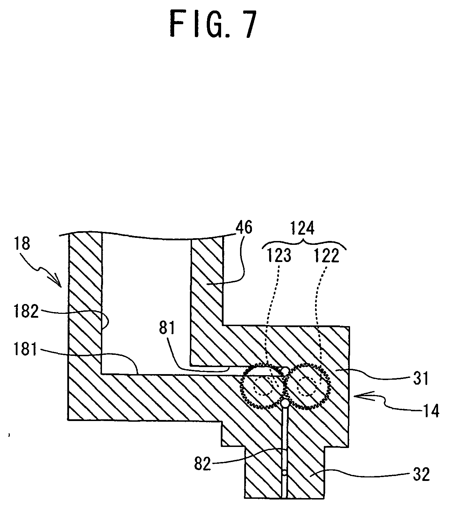

The second pump casing 32 includes a shaft portion 45 (see Fig. 3) at its left side. The shaft portion 45 is connected to the right side of an upper end 42 of a support portion 16 and swingably supports the support portion 16 about the shaft portion 45. The pump casing 14 includes a channel 81 (see Fig. 7) and a channel 82 (see Fig. 7) described later. The channel 81 guides the adhesive from the storage chamber 18 to the gear pump 124. The channel 82 guides the adhesive from the gear pump 124 to the support portion 16.

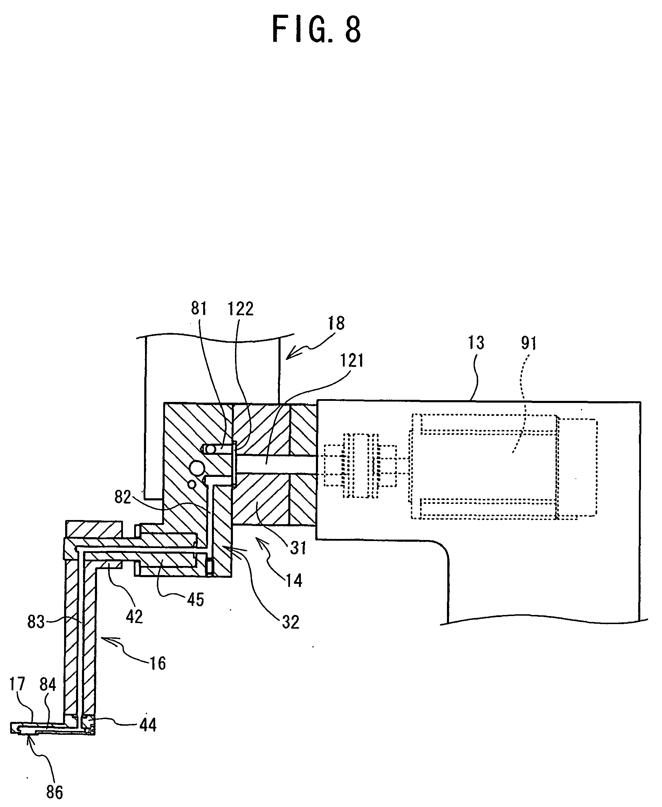

As shown in Figs. 2 and 3, the support portion 16 has a substantially rectangular parallelepiped shape. A slight gap is present between a lower end portion 44 of the support portion 16 and the bed portion 11. The support portion 16 includes therein a channel 83 (see Fig. 8). The channel 83 guides the adhesive from the pump casing 14 to the nozzle 17. The support portion 16 includes the nozzle 17 at the lower end portion 44. The nozzle 17 extends leftward from the support portion 16. The support portion 16 includes a drive transmitting portion 41 at its upper end 42. The drive transmitting portion 41 is connected to an end portion of a movable portion 75 of an air cylinder 24.As shown in Fig. 2, the air cylinder 24 includes an air inlet port 71 and an air inlet port 74. The air inlet port 71 and the air inlet port 74 are connected to an intake/exhaust hose (not shown), respectively. The cloth bonding apparatus 1 controls an intake and an exhaust of a compressed air through the air inlet port 71 and the air inlet port 74. The air cylinder 24 includes a piston (not shown) inside a body portion 73. The piston moves according to the intake and exhaust control. The movable portion 75 is connected to the piston. Thus, the movable portion 75 moves in the back-and-forth direction along with the movement of the piston. The air cylinder 24 includes a position sensor 222 (see Fig. 11) inside the body portion 73. The position sensor 222 detects a position of the piston. The position sensor 222 may be a magnetic sensor that detects a magnetic body attached to a predetermined position of the piston.

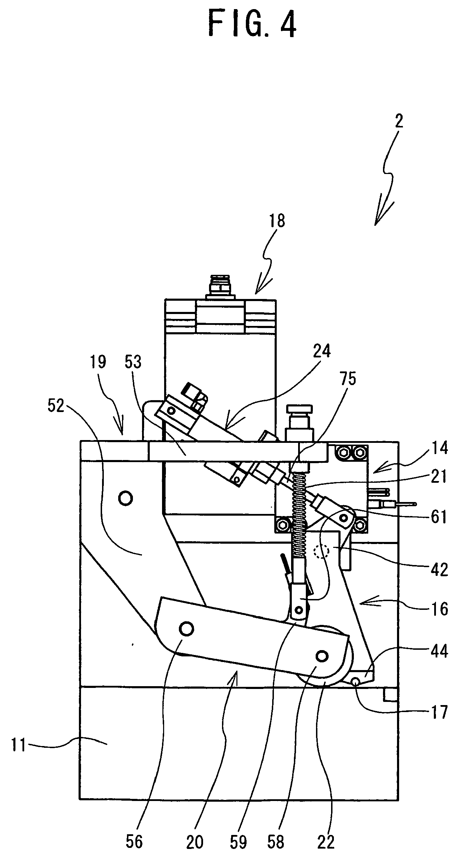

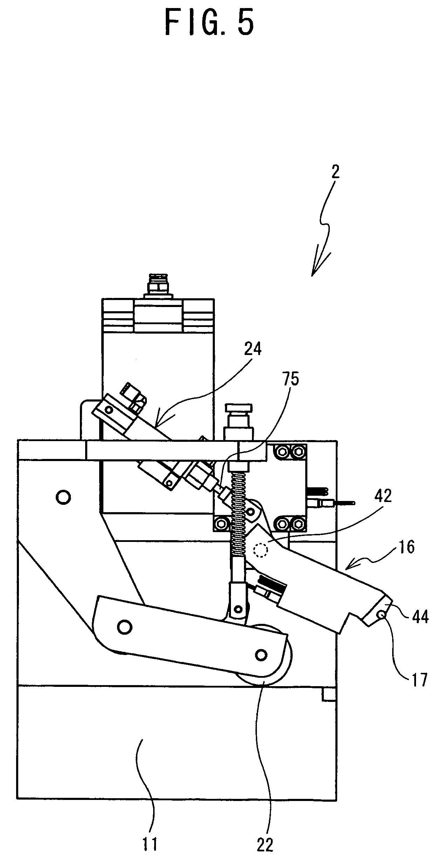

The support portion 16 swings in the back-and-forth direction about the shaft portion 45 in response to the back-and-forth movement of the movable portion 75 of the air cylinder 24. The nozzle 17 moves, along with the swinging of the support portion 16, to a position where the cloth bonding operation is performed (see Fig. 4) and to a position where maintenance is performed (see Fig. 5).

The nozzle 17 has a cylindrical shape. The nozzle 17 includes, at its lower side, a discharge portion 86 (see Fig. 8) through which the adhesive is dischargeable. When the worker performs the cloth bonding operation, the discharge port 86 faces the bed portion 11. When performing the bonding operation, the worker inserts the nozzle 17 between two cloths oppositely arranged. The gear pump 124 supplies the adhesive to the nozzle 17 through the channel 83 inside the support portion 16. The nozzle 17 discharges the adhesive onto the cloth from the discharge port 86. The adhesive adheres to the surface of the cloth positioned below the nozzle 17.

As shown in Figs. 2 and 3, the storage chamber 18 has a substantially rectangular parallelepiped shape. The storage chamber 18 extends upward from the left side of the arm portion 13 and the back of the pump casing 14. The storage chamber 18 includes a body portion 46, a cover portion 47 and a cover shaft portion 48. The body portion 46 has a bottomed tubular shape having an opening at its top. The cover portion 47 covers the opening at the top of the body portion 46. The body portion 46 includes the cover shaft portion 48 at its upper end. The cover shaft portion 48 supports the cover portion 47 in an openable and closable manner. The storage chamber 18 stores a hot-melt adhesive (not shown) inside the body portion 46. The storage chamber 18 supplies the stored adhesive to the gear pump 124 and the nozzle 17 as needed. The hot-melt adhesive liquefies when heated to a predetermined temperature, and cures at a temperature lower than the predetermined temperature.

As shown in Fig. 2, the beam portion 19 includes a body portion 51, a spring support portion 53 and a column portion 52. The body portion 51 extends horizontally to the left from the left rear end of the arm portion 13. The spring support portion 53 has a plate shape and extends horizontally from the left end of the body portion 51 to the front. As shown in Figs. 2 and 4, the column portion 52 extends downwardly and diagonally to the front from the body portion 51 at an angle of about 45 degrees relative to the horizon. The lower end of the column portion 52 is slightly apart from the bed portion 11.

As shown in Fig. 2, the spring support portion 53 has a hole at the front end portion. The spring support portion 53 supports a shaft portion 61 in a vertically movable manner. The shaft portion 61 is inserted through a spring 21. The upper end portion of the shaft portion 61 is inserted into the hole of the spring support portion 53. The column portion 52 includes a shaft portion 62 extending horizontally to the left from the lower end portion. The shaft portion 62 supports a rear end portion 56 of a roller holding portion 20. The roller holding portion 20 swings the front end portion 58 in the vertical direction about the shaft portion 62. The body portion 51 includes the air cylinder 24 on the right side of the spring support portion 53. The air cylinder 24 switches the position of the support portion 16.

The roller holding portion 20 will now be described. The front end portion 58 of the roller holding portion 20 rotatably supports the cylindrically-shaped upper feed roller 22. The upper feed roller 22 is positioned near the rear of the nozzle 17 extending from the support portion 16. The nozzle 17 is preferably positioned within a distance which is twice the diameter of the upper feed roller 22 from the center of rotation of the upper feed roller 22. The roller holding portion 20 includes a shaft support portion 59 on the upper surface slightly forward from the center. The shaft support portion 59 supports the lower end of the shaft portion 61. The spring 21 is interposed between the spring support portion 53 and the lower end of the shaft portion 61. The spring 21 urges the shaft portion 61 downward thereby to urge the roller holding portion 20 connected with the shaft portion 61 downward.

As shown in Fig. 2, the bed portion 11 is provided with a hole 23 below the upper feed roller 22. A part of the lower feed roller 25 (see Fig. 6) slightly projects upward from the hole 23. The lower feed roller 25 rotates together with the upper feed roller 22. The lower feed roller 25 and the upper feed roller 22 feed the cloths sandwiched between the rollers 25 and 22 from the front to the back or from the back to the front.

Description will now be made of a case in which the nozzle 17 moves, with reference to Figs. 4 and 5. As shown in Fig. 4, when the movable portion 75 moves forward, the support portion 16 erects. The nozzle 17 moves near the front of the upper feed roller 22. The discharge port 86 (see Fig. 8) faces downward. The adhesive discharged from the nozzle 17 adheres onto the cloth passing below the nozzle 17. The upper feed roller 22 and the lower feed roller 25 (see Fig. 6) press the cloths from vertical directions immediately after the adhesive adheres onto the cloth. The upper feed roller 22 and the lower feed roller 25 rotate and feed the cloths from the front to the back. The position of the support portion 16 shown in Fig. 4 will be called "a use position" hereinafter.

As shown in Fig. 5, when the movable portion 75 moves backward, the support portion 16 tilts downwardly and diagonally to the front. The nozzle 17 moves to a position separated from the upper feed roller 22 and the bed portion 11. The discharge port 86 (see Fig. 8) faces downwardly and diagonally to the front. A position of the support portion 16 shown in Fig. 5 will be called "a maintenance position" hereinafter.

The internal configuration of the bonding machine 2 will now be described with reference to Fig. 6.

The first motor 91 transmits a rotational drive force to the gear pump 124 via a rotary shaft 121, thereby driving the gear pump 124. The gear pump 124 includes a drive gear 122 and a driven gear 123. The drive gear 122 is fixed on the left end portion of the rotary shaft 121. The drive gear 122 rotates together with the rotary shaft 121. The driven gear 123 meshes with the drive gear 122. The first motor 91 is positioned inside the arm portion 13 and rightward from the part where the pump casing 14 is connected with the arm portion 13. The rotary shaft 121 is provided inside the pump casing 14 and extends leftward from the rotary shaft of the first motor 91. The drive gear 122 and the driven gear 123 supply an appropriate amount of adhesive to the nozzle 17.

The second motor 92 transmits a rotational drive force to the upper feed roller 22 via a rotary shaft 126, a belt 129, a rotary shaft 127, a belt 130 and a rotary shaft 128, thereby driving the upper feed roller 22. The second motor 92 is positioned inside the arm portion 13 and rightward from the part where the beam portion 19 is connected with the arm portion 13. The rotary shaft 126 extends leftward from the rotary shaft of the second motor 92 and penetrates through the body portion 51. The left end portion of the rotary shaft 126 is positioned inside the column portion 52. The left end portion of the rotary shaft 126 supports a pulley 171. The right end portion of the rotary shaft 127 extends inside the lower end portion of the column portion 52. The left end portion of the rotary shaft 127 extends inside the rear end portion 56 of the roller holding portion 20. The right and left end portions of the rotary shaft 127 support pulleys 172 and 173, respectively. The rotary shaft 128 is a rotary shaft of the upper feed roller 22. The left end portion of the rotary shaft 128 extends to the inside of the front end portion 58 of the roller holding portion 20 and supports a pulley 174. The right end portion of the rotary shaft 128 projects from the front end portion 58 and supports the upper feed roller 22. The belt 129 is crossed between the pulley 171 at the left end portion of the rotary shaft 126 and the pulley 172 at the right end portion of the rotary shaft 127 inside the column portion 52. The belt 130 is crossed between the pulley 173 at the left end portion of the rotary shaft 127 and the pulley 174 at the left end portion of the rotary shaft 128 inside the roller holding portion 20.

The third motor 93 transmits a rotational drive force via a rotary shaft 141 and a belt 142 to the lower feed roller 25, thereby driving the lower feed roller 25. The lower feed roller 25 has a cylindrical shape and is fixed on the rotary shaft 141. The lower feed roller 25 is positioned below the upper feed roller 22 and inside the bed portion 11. The bed portion 11 has a support bed 4 therein. The support bed 4 rotatably supports the rotary shaft 141. The belt 142 is crossed between a pulley 175 of the rotary shaft of the third motor 93 and a pulley 176 at the right end portion of the rotary shaft 141 inside the bed portion 11.

A first encoder 94 is connected to the right end of the first motor 91. The first encoder 94 detects a rotation amount of the first motor 91. A second encoder 95 is connected with the right end of the second motor 92. The second encoder 95 detects a rotation amount of the second motor 92. A third encoder 96 is connected with the right end of the third motor 93. The third encoder 96 detects a rotation amount of the third motor 93.

The storage chamber 18 includes a first storage chamber heater 101, a second storage chamber heater 102 and a storage chamber temperature sensor 111 in its peripheral wall 182 (see Fig. 7). The first storage chamber heater 101 and the second storage chamber heater 102 heat the body portion 46 (see Fig. 2) of the storage chamber 18 to thereby heat the adhesive stored in the body portion 46. The storage chamber temperature sensor 111 detects a temperature of the body portion 46 to thereby measure the temperature of the adhesive stored in the body portion 46. The bonding machine 2 uses the first storage chamber heater 101, the second storage chamber heater 102 and the storage chamber temperature sensor 111 to heat the hot-melt adhesive inside the storage chamber 18 to a predetermined temperature and liquefy it.

The first pump casing 31 (see Figs. 1 and 2) of the pump casing 14 includes therein a pump casing heater 103 and a pump temperature sensor 112. The pump casing heater 103 heats the first pump casing 31 to thereby heat the adhesive flowing inside the first pump casing 31. The pump temperature sensor 112 measures the temperature of the first pump casing 31.

The support portion 16 includes therein a support portion heater 104 and a support portion temperature sensor 113. The support portion heater 104 heats the support portion 16 to thereby heat the adhesive flowing inside the support portion 16. The support portion temperature sensor 113 measures the temperature of the support portion 16.

The channels for the adhesive in the bonding machine 2 will be described with reference to Figs. 7 and 8.

As shown in Fig. 7, the body portion 46 of the storage chamber 18 includes the peripheral wall 182 and a bottom wall 181. The body portion 46 stores the adhesive in a space enclosed by the peripheral wall 182 and the bottom wall 181. The channel 81 is a throughhole extending from the lower end of the peripheral wall 182 at the pump casing 14 side toward the pump casing 14. The channel 81 guides the adhesive stored in the body portion 46 to the gear pump 124.

The channel 81 leads from the storage chamber 18 to the center inside the first pump casing 31 of the pump casing 14. The channel 81 bends rightward at a right angle at the center of the first pump casing 31 and connects to the upper end of the part where the drive gear 122 and the driven gear 123 mesh with each other.

As shown in Fig. 8, the channel 82 guides the adhesive that has passed through the gear pump 124 to the channel 83 of the support portion 16. The channel 82 extends leftward from the lower end of the part where the drive gear 122 and the driven gear 123 (see Fig. 7) mesh with each other. The leftwardly-extending channel 82 bends downward, bends leftward at the lower end, and connects to the channel 83 inside the support portion 16 through the shaft portion 45.

The channel 83 guides the adhesive that has flowed through the channel 82 to the nozzle 17. The channel 83 extends from the upper end portion 42 to the lower end portion 44 inside the support portion 16, and connects to a channel 84 inside the nozzle 17.

The channel 84 guides the adhesive that has flowed through the channel 83 to the discharge port 86. The discharge port 86 is provided at a lower part of the left end portion of the nozzle 17. The channel 84 extends from the right end to the left end within the nozzle 17 and is connected with the discharge port 86. The adhesive is discharged through the discharge port 86 to the outside.

A flow of the adhesive will now be described with reference to Figs. 7 and 8. The adhesive flows from the storage chamber 18 to the discharge port 86 of the nozzle 17 via the pump casing 14 and the support portion 16. The first storage chamber heater 101 (see Fig. 6) and the second storage chamber heater 102 (see Fig. 6) heat the adhesive inside the storage chamber 18. The adhesive melts to be liquid.

The first motor 91 drives the drive gear 122 so that the drive gear 122 and the driven gear 123 rotate together. The gear pump 124 feeds the liquid adhesive from the channel 81 to the channel 82. The pump casing heater 103 (see Fig. 6) heats the adhesive flowing through the channel 81 and the channel 82. The adhesive maintains its liquid state.

The adhesive flows from the channel 82 toward the channel 83, leading to the channel 84, and is discharged through the discharge port 86 to the outside of the nozzle 17. The support portion heater 104 (see Fig. 6) heats the adhesive flowing through the channel 83. The adhesive is discharged through the discharge port 86 to the outside in the liquid state.

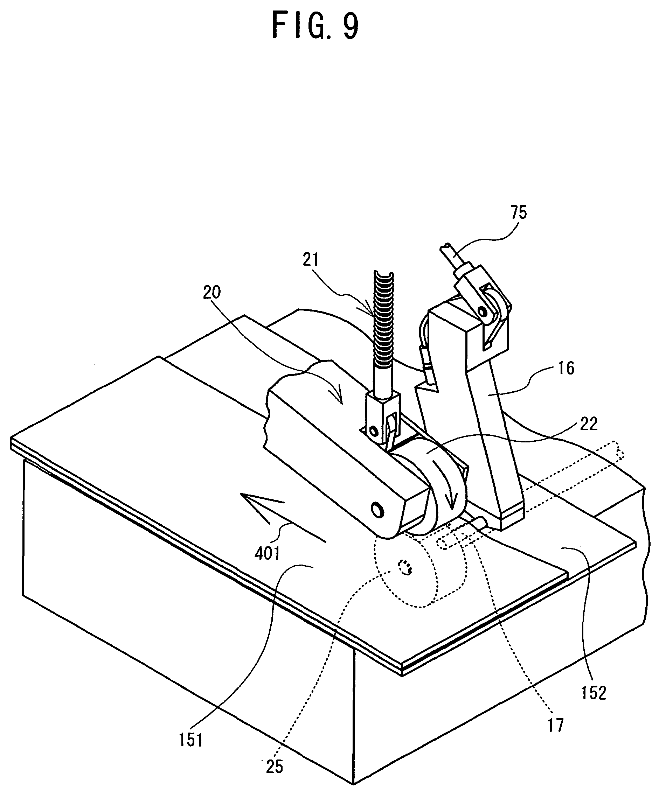

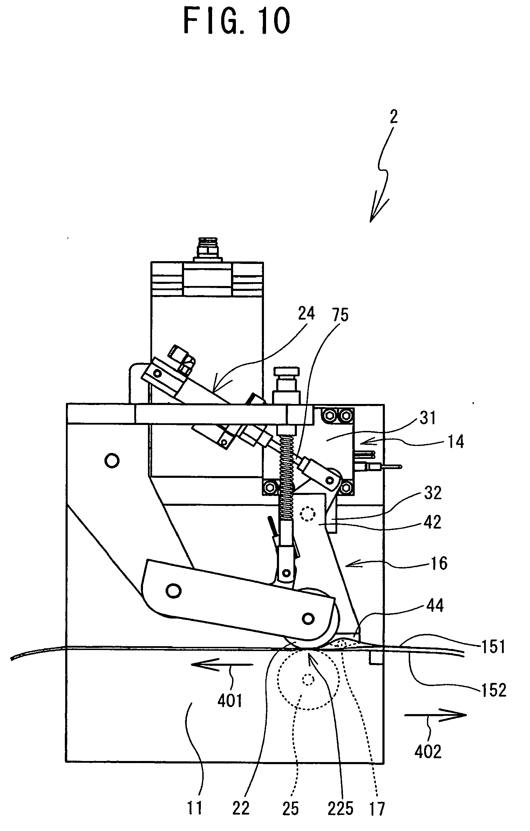

The operations of the bonding machine 2 during the bonding operation of bonding an upper cloth 151 and a lower cloth 152 will now be described with reference to Figs. 9 and 10. When performing the bonding operation, the bonding machine 2 moves the movable portion 75 of the air cylinder 24 forward. The support portion 16 is positioned at the use position (see Fig. 4). The worker lays the upper cloth 151 on the lower cloth 152. The worker places the nozzle 17 at a portion above the lower cloth 152 which needs to be bonded. The upper feed roller 22 and the lower feed roller 25 sandwich the upper cloth 151 and the lower cloth 152 behind the nozzle 17. A part where the upper feed roller 22 and the lower feed roller 25 sandwich the cloths is called a pressing portion 225 (see Fig. 10).

When the worker steps on and presses down the pedal 208 (see Fig. 1) in the above state, the gear pump 124 (see Fig. 7) is driven. Thus, the adhesive is discharged from the nozzle 17 and adheres onto the lower cloth 152. As shown in Fig. 10, the upper feed roller 22 and the lower feed roller 25 rotate in a direction to feed the upper cloth 151 and the lower cloth 152 in a direction 401 relative to the nozzle 17. The first direction 401 in the present embodiment is a direction from the front to the back. The spring 21 (see Fig. 9) urges the upper feed roller 22 downward. Thus, the upper feed roller 22 and the lower feed roller 25 press and bond the upper cloth 151 and the lower cloth 152 together.

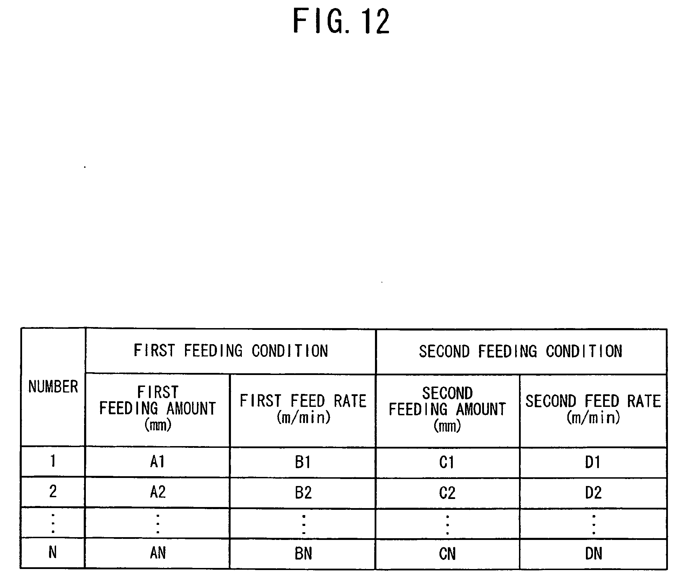

An electric configuration of the cloth bonding apparatus 1 will now be described with reference to Fig. 11. The cloth bonding apparatus 1 includes a CPU 201, a ROM 202, a RAM 203 and a storage device 29. The CPU 201 performs reception processing and control processing. The reception processing is directed for receiving input information from an input device including the keys 209 and the pedal 208. The reception processing is also directed for receiving detected information detected by various sensors. The control processing is directed for controlling the motors and the heaters or the like. The ROM 202 stores therein programs to be executed by the CPU 201 and various initial setting parameters or the like. The ROM 202 stores therein a setting table of Fig. 12, for example. The setting table of Fig. 12 will be described later. The RAM 203 temporarily stores therein data such as timer value, counter value and flag. The storage device 29 stores therein various items of setting information input by the worker. The CPU 201 is electrically connected with the ROM 202, the RAM 203 and the storage device 29, respectively.

The pedal 208 is electrically connected with the CPU 201. The worker operates the pedal 208 for adjusting the cloth feed rate. The CPU 201 can recognize an amount by which the pedal 208 is pressed (hereinafter called a stepping amount of the pedal 208). The CPU 201 determines the rotation speeds of the upper feed roller 22 and the lower feed roller 25, respectively, and the rotation speed of the drive gear 122 based on the recognized stepping amount of the pedal 208.

The keys 209 are electrically connected with the CPU 201. The worker operates the keys 209 for setting various operations. The CPU 201 recognizes a pressing state of the keys 209 by the worker. The CPU 201 stores information on various operation settings in the storage device 29 based on the recognized pressing state of the keys 209. For example, the CPU 201 selects one combination of conditions from among a plurality of combinations of conditions stored in the setting table (see Fig. 12) based on the recognized pressed state of the keys 209. The CPU 201 stores the selected combination of conditions in the storage device 29.

The position sensor 222 is electrically connected with the CPU 201. The CPU 201 recognizes information on the position of the piston detected by the position sensor 222.

The temperature sensors 111 to 113 are electrically connected with the CPU 201, respectively. The CPU 201 recognizes information on the temperatures detected by the temperature sensors 111 to 113, respectively. The CPU 201 recognizes the temperature of the adhesive flowing inside the storage chamber 18, the pump casing 14 and the support portion 16 based on the information on the temperatures detected by the temperature sensors 111 to 113, respectively.

The encoders 94 to 96 are electrically connected with the CPU 201, respectively. The CPU 201 recognizes the actual rotation speed of the motors 91 to 93 based on the information on the rotation amounts detected by the encoders 94 to 96, respectively.

A display driver 205 is electrically connected with the CPU 201. The display driver 205 is electrically connected with the liquid crystal display 207. The CPU 201 displays a desired image on the liquid crystal display 207 via the display driver 205.

An air driver 204 is electrically connected with the CPU 201. The air driver 204 is electrically connected with the air cylinder 24. The CPU 201 controls the pressure of the air to be fed into the air inlet port 71 and the air inlet port 74 (see Fig. 2) of the air cylinder 24 by means of the air driver 204. The support portion 16 moves to the use position or maintenance position based on the operation of the air cylinder 24.

A motor driver 206 is electrically connected with the CPU 201. The motors 91 to 93 are electrically connected with the motor driver 206, respectively. The CPU 201 controls the motors 91 to 93 via the motor driver 206.

The heaters 101 to 104 are electrically connected with the CPU 201, respectively. The CPU 201 controls the respective heaters 101 to 104 to turn them ON or OFF.

The setting table stored in the ROM 202 will now be described with reference to Fig. 12. The setting table stores therein a plurality of combinations of conditions numbered 1 through N. The combinations of conditions are each a condition for driving the cloth bonding apparatus 1 after the worker operates the pedal 208 to give an instruction for stopping the processing of supplying the adhesive onto the cloth. Specifically, the combinations of conditions may each be a combination of a first feeding condition and a second feeding condition. The first feeding condition is a condition under which the cloth bonding apparatus 1 feeds the cloths in the first direction 401 from the front to the back (see Figs. 9 and 10). The second feeding condition is a condition under which the cloth boning apparatus 1 feeds the cloths in a direction 402 that is opposite to the first direction (which will be called a second direction 402 hereinafter). The second direction 402 in the present embodiment is a direction from the back to the front. The first feeding condition and the second feeding condition each contain a feeding amount (mm) and a feed rate (m/min).

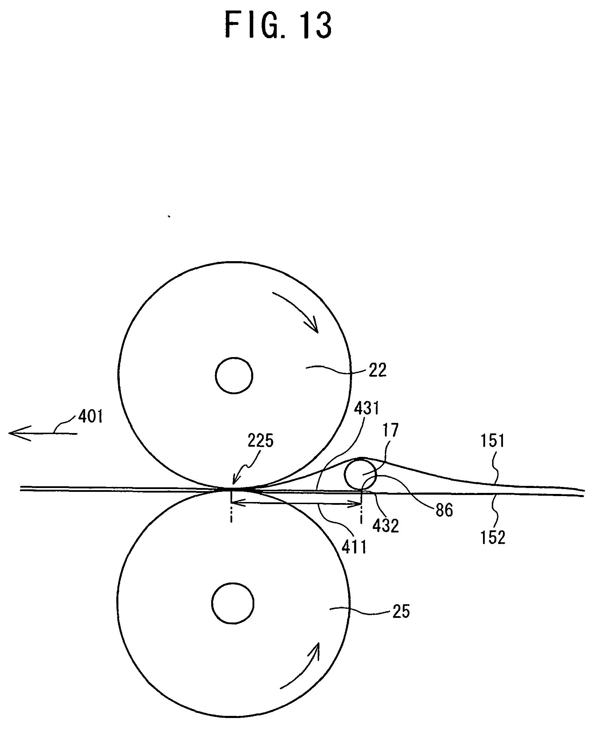

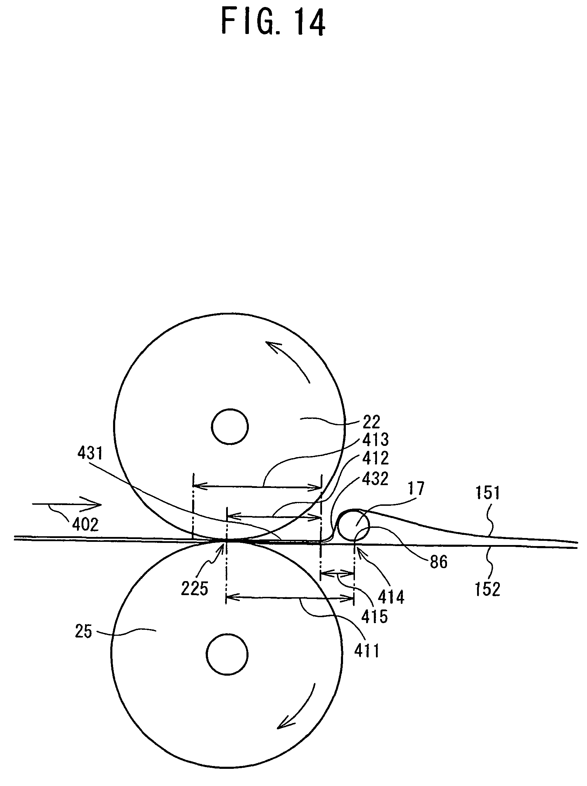

The combinations of conditions will now be described with reference to Figs. 13 and 14. A part of the lower cloth 152 to which the adhesive discharged through the discharge port 86 has been applied is called an adhesion portion. Of the adhesion portion, a part that is closest to the nozzle 17 is called a terminal portion 432. For stopping the processing of supplying the adhesive onto the cloth, the worker inputs a stop instruction into the cloth bonding apparatus 1. As shown in Fig. 13, the adhesive has already been applied to a portion 431 of the lower cloth 152 between the nozzle 17 and the pressing portion 225 (a section indicated by an arrow 411) when the stop instruction is input. The first feeding condition is a feeding condition under which the cloth bonding apparatus 1 presses the adhesion portion up to the terminal portion 432. The first feeding amount is a feeding amount in the first direction 401. The first feeding amount is set based on a condition including a distance between the nozzle 17 (more specifically, the discharge port 86) and the pressing portion 225 (i.e. a distance indicated by the arrow 411). The first feeding amount may be an expected value of an amount of adhesive to be spread in the adhesion portion through the pressing of the adhesion portion by the pressing portion 225. The first feed rate is a feed rate in the first direction 401. The first feed rate is set based on conditions including an adhesive type and a cloth type.

The second feeding condition is a feeding condition under which the cloth bonding apparatus 1 positions the terminal portion 432 in the vicinity of the nozzle 17. As shown in Fig. 14, a position where the adhesive discharged through the discharge port 86 adheres onto the cloth is called an adhesion position 414. When the feeding under the first feeding condition is completed, the cloth bonding apparatus 1 returns the upper cloth 151 and the lower cloth 152 until a distance between the adhesion position 414 and the terminal portion 432 is a specified distance (a distance indicated by an arrow 415). The specified distance indicated by the arrow 415 may be defined beforehand based on a size of the nozzle 17. When the operation of applying the adhesive is resumed, the cloth bonding apparatus 1 can apply the adhesive in the vicinity of the terminal portion 432 if the terminal portion 432 has returned near the nozzle 17. Thus, the cloth bonding apparatus 1 returns the terminal portion 432 to the vicinity of the nozzle 17, thereby reducing an area on which the adhesive will not be applied. The second feeding amount is the feeding amount in the second direction 402. The second feeding amount is set based on conditions including the distance between the nozzle 17 (more specifically, the discharge port 86) and the pressing portion 225 (i.e. the distance indicated by the arrow 411) and the size of the nozzle 17. In the present embodiment, the second feeding amount is a distance indicated by an arrow 412. The second feeding amount is smaller than the first feeding amount indicated by the arrow 411. The portion 431 of the lower cloth 152 shown in Fig. 13 has been moved to a section indicated by an arrow 413 in Fig. 14. The second feed rate is a feed rate in the second direction 402. The second feed rate may be set based on the conditions including an adhesive type and a cloth type.

The respective values of the combinations of conditions are exemplified.
The radius of the nozzle 17 is 2 mm. The discharge port 86 is positioned immediately below the center of the nozzle 17. The distance between the discharge port 86 and the pressing portion 225 (the distance indicated by the arrow 411) is 18 mm. The first feeding amount is 20 mm. The first feed rate is 1.0 m/min. The second feeding amount is 18 mm. The second feed rate is 0.5 m/min. Values are not limited to the above examples and they may be varied as needed.

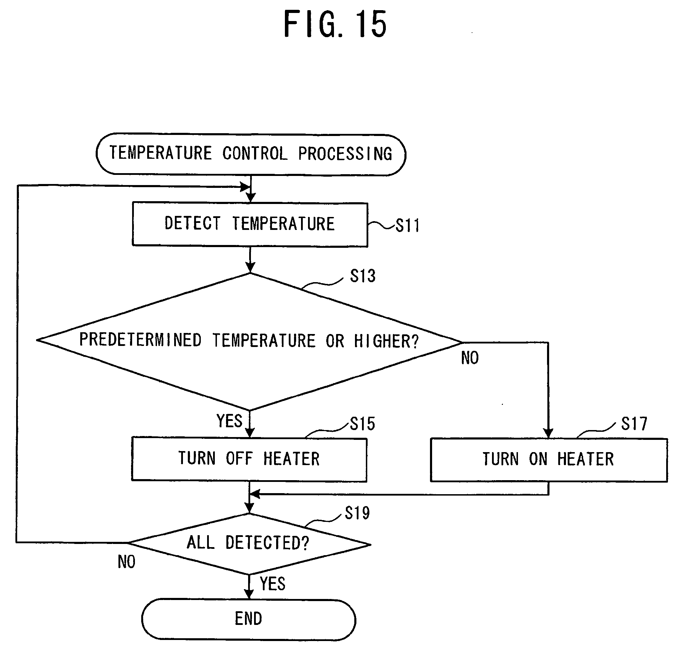

Various processing of the cloth bonding apparatus 1 will now be described with reference to Figs. 15 to 17. The CPU 201 performs temperature control processing at a predetermined cycle (such as every two seconds). When the worker operates the keys 209 to input an instruction, the CPU 201 performs setting processing. When the worker steps on and presses down the pedal 208 while the cloth bonding operation is ready, the CPU 201 performs supply control processing.

The temperature control processing will now be described with reference to Fig. 15. The temperature control processing is directed for controlling the heaters 101 to 104 to turn them ON or OFF based on the information on the temperatures detected by the temperature sensors 111 to 113, respectively. The cloth bonding apparatus 1 heats the adhesive to be liquid, and maintains the temperature of the adhesive at a predetermined temperature or higher.

As shown in Fig. 15, the CPU 201 obtains the information on the temperature detected by any of the temperature sensors 111 to 113 (S11). When the obtained temperature is the predetermined value or more (e.g. 100°C or higher) (S13: YES), the adhesive is liquid. The CPU 201 turns off the heater provided in the portion including the temperature sensor which has obtained the temperature (S15). The CPU 201 proceeds to the processing in step S 19. When the obtained temperature is less than the predetermined value (e.g. less than 100°C) (S13: NO), the adhesive may be cooled to be solid. The CPU 201 turns on the heater provided in the portion including the temperature sensor which has obtained the temperature (S 17). The CPU 201 proceeds to the processing in step S19.

The CPU 201 determines, in the processing in step S19, whether or not the above processing (S11 to S17) has been performed on all the temperature sensors 111 to 113 (S19). When there is any remaining temperature sensor on which the above processing has not been performed (S 19: NO), the CPU 201 returns to the processing in step S11. The CPU 201 repeats the above processing on the temperature sensor unprocessed. When the above processing has been performed on all the temperature sensors (S 19: YES), the CPU 201 ends the temperature control processing.

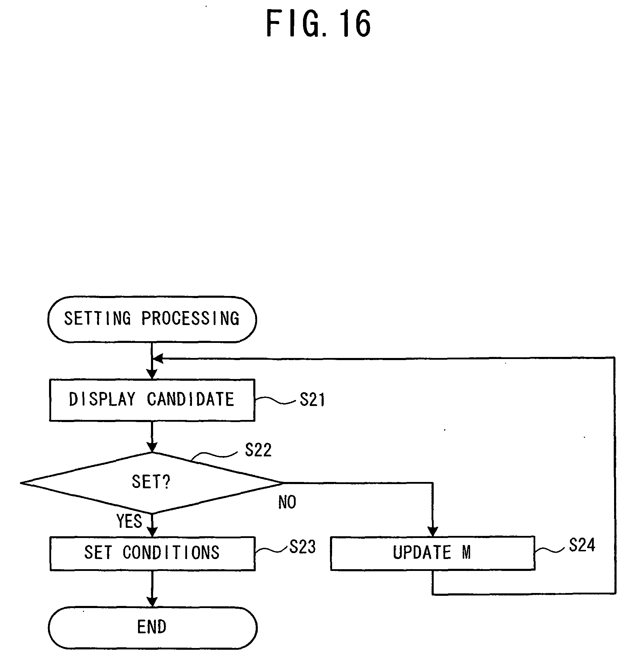

The setting processing will now be described with reference to Fig. 16. In the setting processing, the CPU 201 sets a combination of conditions depending on the pressing state of the keys 209 from among a plurality of combinations of conditions stored in the setting table of Fig. 12 as a specific combination of conditions.

As shown in Fig. 16, the CPU 201 outputs an instruction to the display driver 205 to display a candidate of the specific combination of conditions on the liquid crystal display 207 (S21). In the first round of processing, the CPU 201 sets a combination of conditions corresponding to a number stored in the storage device 29 for the candidate. In the second and subsequent rounds of processing, the CPU 201 sets as the candidate a combination of conditions stored corresponding to a number M in the setting table. The CPU 201 sets M in step S24 described later. The worker operates the keys 209 to input an instruction as to whether or not to set the combination of conditions displayed as the candidate on the liquid crystal display 207 as the specific combination of conditions.

When the worker inputs an instruction of not setting the combination of conditions displayed on the liquid crystal display 207 as the specific combination of conditions (S22: NO), the CPU 201 updates the number M that is used to set the candidate from the setting table (S24). In the first round of processing, the CPU 201 sets 1 for the number M and updates the number M. In the second and subsequent rounds of processing, the CPU 201 updates the number M with the number M+1. The CPU 201 returns to the processing in step S21.When the worker inputs an instruction of setting the combination of conditions displayed on the liquid crystal display 207 as the specific combination of conditions (S22: YES), the CPU 201 sets the combination of conditions displayed on the liquid crystal display 207 as the specific combination of conditions (S23). In step S23, the CPU 201 stores the number corresponding to the specific combination of conditions in the storage device 29 (S23). The setting processing ends subsequent to step S23.

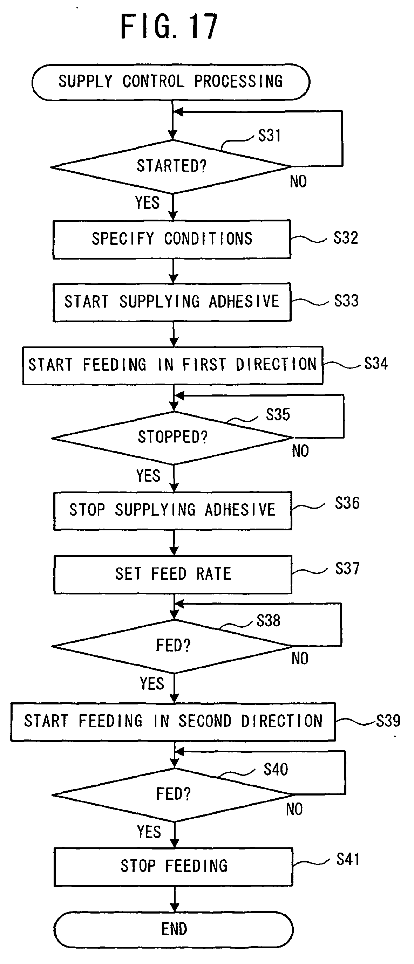

The supply control processing will now be described with reference to Fig. 17. The CPU 201 determines whether or not the worker has operated the pedal 208 and input an instruction of starting the supply control processing (S31). When the worker operates the pedal 208, the pedal 208 outputs the instruction of starting the supply control processing to the CPU 201. When the pedal 208 has not input the instruction (S31: NO), the CPU 201 returns to the processing in step S31. When the pedal 208 has input the instruction (S31: YES), the CPU 201 specifies the combination of conditions corresponding to the number stored in the storage device 29 as the specific combination of conditions (S32). The number stored in the storage device 29 is set by the CPU 201 in the setting processing as describe above.

The CPU 201 outputs an instruction of starting to supply the adhesive to the motor driver 206 (S33). The amount of the adhesive to be supplied is set depending on an adhesive type, a cloth type and a cloth feed rate. The amount of the adhesive to be supplied may be set in consideration of the conditions, such as the size of the discharge port 86 and the thickness of the adhesive-applied cloth, in addition to the above conditions. The motor driver 206 drives the first motor 91 in response to the instruction from the CPU 201. The first motor 91 is driven to allow the nozzle 17 to discharge an appropriate amount of adhesive.

The CPU 201 outputs an instruction of starting to feed the cloths to the motor driver 206 (S34). The motor driver 206 drives the second motor 92 and the third motor 93 in response to the instruction from the CPU 201. The second motor 92 drives the upper feed roller 22. The third motor 93 drives the lower feed roller 25. The upper feed roller 22 and the lower feed roller 25 are rotated and driven so as to feed the upper cloth 151 and the lower cloth 152 in the first direction 401.

The CPU 201 determines whether or not the pedal 208 has input an instruction of stopping the supply control processing (S35). When the worker stops operating the pedal 208, the pedal 208 outputs to the CPU 201 the instruction of stopping the supply control processing. When the pedal 208 has not input the instruction (S35: NO), the CPU 201 proceeds to the processing in step S35. When the pedal 208 has input the instruction (S35: YES), the CPU 201 outputs the instruction of stopping supplying the adhesive to the motor driver 206 (S36). The motor driver 206 stops driving the first motor 91 in response to the instruction from the CPU 201. When the first motor 91 stops, the supply of the adhesive also stops.

The CPU 201 sets the first feed rate for the feed rate in the first direction 401 based on the specific combination of conditions specified in step S32 (S37). In step S37, the CPU 201 outputs to the motor driver 206 an instruction of feeding the upper cloth 151 and the lower cloth 152 in the first direction 401 at the set first feed rate. The motor driver 206 adjusts the rotational speeds of the second motor 92 and the third motor 93, respectively, according to the instruction from the CPU 201. The feed rate of the upper cloth 151 and the lower cloth 152 is made to be the first feed rate in the specific combination of conditions specified in step S32. The CPU 201 starts counting an elapsed time T1 since the processing in step S37 was started.

The CPU 201 determines whether or not the feeding amount of the upper cloth 151 and the lower cloth 152 after the processing in step S37 was started has reached the first feeding amount (S38). When (the first feed rate set in step S37) x T1 = (the first feeding amount in the specific combination of conditions in step S32) is satisfied, for example, the CPU 201 determines that the upper cloth 151 and the lower cloth 152 have been fed by the first feeding amount. When the cloth bonding apparatus 1 has not fed the upper cloth 151 and the lower cloth 152 by the first feeding amount (S38: NO), the CPU 201 returns to the processing in step S38. When the cloth bonding apparatus 1 has fed the upper cloth 151 and the lower cloth 152 by the first feeding amount (S38: YES), the CPU 201 starts processing of feeding the upper cloth 151 and the lower cloth 152 in the second direction 402 (S39). In step S39, the CPU 201 sets the second feed rate for the feed rate in the second direction 402 based on the specific combination of conditions specified in step S32. The CPU 201 outputs to the motor driver 206 an instruction of feeding the upper cloth 151 and the lower cloth 152 in the second direction 402 at the set second feed rate. The feed rate in the second direction 402 of the upper cloth 151 and the lower cloth 152 is made to be the second feed rate in the specific combination of conditions specified in step S32. The CPU 201 starts counting an elapsed time T2 since the processing in step S39 was started.

The CPU 201 determines whether or not the feeding amount in the second direction 402 of the upper cloth 151 and the lower cloth 152 after the processing in step S39 was started has reached the second feeding amount (S40). When (the second feed rate set in step S39) x T2 = (the second feeding amount in the specific combination of conditions in step S32) is satisfied, for example, the CPU 201 determines that the upper cloth 151 and the lower cloth 152 have been fed by the second feeding amount. When the cloth bonding apparatus 1 has not fed the upper cloth 151 and the lower cloth 152 by the second feeding amount (S40: NO), the CPU 201 returns to the processing in step S40. When the cloth bonding apparatus 1 has fed the upper cloth 151 and the lower cloth 152 by the second feeding amount (S40: YES), the CPU 201 stops the processing of feeding the upper cloth 151 and the lower cloth 152 in the second direction 402 (S41). In step S41, the CPU 201 outputs an instruction of stopping feeding the upper cloth 151 and the lower cloth 152 to the motor driver 206. The supply control processing ends.

In the cloth bonding apparatus 1, the upper feed roller 22 and the lower feed roller 25 correspond to the feeding portion and the pressing portion. The CPU 201 which performs the processing in step S33 and step S36 in Fig. 17 functions as the discharge control portion of the present invention. The CPU 201 that performs the processing in step S37 and step S38 functions as the first feeding control portion of the present invention. The CPU 201 which performs the processing in step S39 and step S40 functions as the second feeding control portion of the present invention. The ROM 202 storing the setting table of Fig. 12 therein corresponds to the storage portion of the present invention. The CPU 201 that performs the processing in step S23 of Fig. 16 functions as a specifying portion of the present invention. The position of the lower cloth 152 in a state where the terminal portion 432 is shifted in the first direction from the adhesion position 414 by the distance based on the size of the nozzle 17 (the distance indicated by the arrow 415) as shown in Fig. 14 corresponds to the specified position of the present invention. The range within the specified distance from the terminal portion 432 (the distance indicated by the arrow 415 in the above embodiment) corresponds to the specified range of the present invention.

The cloth bonding apparatus 1 can prevent a part of the adhesion portion (i.e. the portion 431 shown in Fig.13) from being left unpressed. Thus, the cloth bonding apparatus 1 can prevent partial drop of the bonding strength. After pressing the terminal portion 432, the cloth bonding apparatus 1 feeds the cloths in the second direction 402 to position the terminal portion 432 around the nozzle 17. The cloth bonding apparatus 1 can reduce the area where the adhesive is not applied, thereby preventing partial drop of the bonding strength. The second feeding amount is set in consideration of the size of the nozzle 17. Thus, even if the cloth bonding apparatus 1 feeds the cloths in the second direction 402, the nozzle 17 will not separate the pressed and bonded adhesion portion from the upper cloth 151.

The cloth bonding apparatus 1 performs the setting processing to specify one of a plurality of combinations of conditions stored in the setting table as the specific combination of conditions. Thus, the cloth bonding apparatus 1 can lessen a burden on the worker to set the feeding conditions. The cloth bonding apparatus 1 may preferably specify a combination of conditions based on conditions including at least one of a nature of a material of the cloth, a thickness of the cloth, a nature of a material of the adhesive and the discharge amount of the adhesive. In this case, the cloth bonding apparatus 1 can more effectively prevent partial drop of the bonding strength.

For example, the following modifications (1) to (5) may be appropriately made.

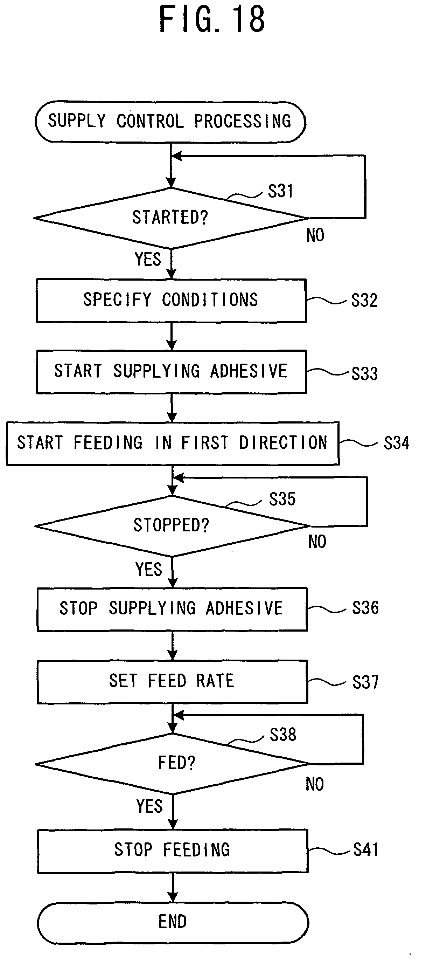

(1) The members provided in the cloth bonding apparatus 1 may be changed as needed. For example, the gear pump 124 according to the above embodiment supplies or stops supplying the adhesive to the nozzle 17. However, a mechanism other than the gear pump 124 may be used to supply or stop supplying the adhesive. For example, the cloth bonding apparatus may be provided with a valve in a channel. The cloth bonding apparatus may supply or stop supplying the adhesive by opening or closing the valve. The adhesive may be supplied by means of an air pressure. The shape of the nozzle 17, and the position and size of the discharge port 86 may be changed. In other variants of the cloth bonding apparatus, for example, multiple types of nozzles may be mountable and removable on the support portion 16. The multiple types of nozzles are different in shape and in position and size of their discharge port. The worker may mount one of the nozzles on the support portion 16, according to conditions, such as a type and a nature of a material of the cloth. In the above embodiment, the upper feed roller 22 and the lower feed roller 25 feed and press the cloths. However, separate individual members may be provided for feeding the cloths and for pressing the cloths. In the above embodiment, for example, the upper feed roller 22 and the lower feed roller 25 feed the cloths in the first direction and feed the cloths in the second direction. However, separate individual members may be provided for feeding the cloths in the first direction and for feeding the cloths in the second direction.
(2) In the setting processing according to the above embodiment, the CPU 201 specifies a specific combination of conditions from among the combinations of conditions stored in the setting table. For example, if the cloth bonding apparatus 1 does not store the setting table therein, the CPU 201 may set the specific combination of conditions based on the worker's operation of the keys 209. In another variant, for example, the CPU 201 may use one predefined combination of conditions for the specific combination of conditions.
(3) As shown in Fig. 18, the CPU 201 may perform the supply control processing in which steps S39 and S40 of Fig. 17. In the supply control processing of Fig. 18, when the cloth bonding apparatus 1 has fed the upper cloth 151 and the lower cloth 152 by the first feeding amount (S38: YES), the CPU 201 outputs an instruction of stopping feeding the upper cloth 151 and the lower cloth 152 to the motor driver 206 (S41). Thereafter, the supply control processing ends. The cloth bonding apparatus 1 performs the supply control processing of Fig. 18, thereby reliably preventing the adhesion portion from being left unpressed. In the variant (3), the upper feed roller 22 and the lower feed roller 25 may have a function of feeding the cloths in the first direction.
(4) The order of performing the respective steps in the supply control processing of Fig. 17 may be modified as needed. For example, the CPU 201 may perform step S33 after step S34.
(5) The types of conditions and the contents of each condition stored in the setting table may vary depending on the setting processing and the supply control processing. For example, when the CPU 201 performs the supply control processing of Fig. 18, the setting table may store therein only the first feeding condition. A storage device other than the ROM 202 may store the setting table therein. The second feeding amount may be a value that is set based on a position other than the specified position of Fig. 14.

## Claims

1. A cloth bonding apparatus(1) comprising:
a nozzle(17) including a discharge port(86) through which an adhesive is dischargeable;
a feeding portion(22,25) that is adapted to feed a cloth(152) in a first direction(401) relative to the nozzle;
a discharge control portion(201) that starts and stops processing of discharging the adhesive through the discharge port toward the cloth;
a pressing portion(22,25) that is located in the first direction relative to the nozzle and that is adapted to press an adhesion portion(431) with another layer of cloth, the adhesion portion being a part of the cloth to which the adhesive discharged from the discharge port has been applied; and
a first feeding control portion(201) that, when the discharge control portion has stopped the processing of discharging the adhesive, outputs an instruction to the feeding portion thereby causing the feeding portion to feed the cloth in the first direction up to a position where the pressing portion presses a terminal portion(432) of the adhesion portion.

2. The cloth bonding apparatus according to claim 1, wherein
the feeding portion is adapted to feed the cloth both in the first direction and a second direction(402) relative to the nozzle, the second direction being opposite to the first direction, and
the cloth bonding apparatus further comprises a second feeding control portion(201) that, after the pressing portion has pressed the terminal portion, outputs an instruction to the feeding portion thereby causing the feeding portion to feed the cloth in the second direction up to a specified position where the adhesive discharged through the discharge port is to be applied to at least a part of a specified range including the terminal portion.

3. The cloth bonding apparatus according to claim 2, wherein the specified position is separated in the first direction from a position where the adhesive discharged through the discharge port is to be applied to the terminal portion by a distance that is defined based on a size of the nozzle.

4. The cloth bonding apparatus according to claim 2 or 3, further comprising:
a storage portion(202) that stores a plurality of combinations of conditions, the plurality of combinations of conditions each being a combination of a first feeding condition output by the first feeding control portion to the feeding portion and a second feeding conditions output by the second feeding control portion to the feeding portion; and
a specifying portion(201) that specifies as a specific combination one combination from among the plurality of combinations of conditions stored in the storage portion,
wherein the first feeding control portion and the second feeding control portion respectively output instructions to the feeding portion based on the specific combination specified by the specifying portion.

## Patentansprüche

1. Tuchfügegerät (1) mit:
einer Düse (17) einschließlich eines Auslassanschlusses (86), durch den ein Klebemittel ausgelassen werden kann;
einem Vorschubabschnitt (22, 25) der daran angepasst ist, ein Tuch (152) in einer ersten Richtung (401) relativ zu der Düse vorzuschieben;
einem Auslasssteuerabschnitt (201), der die Verarbeitung zum Auslassen des Klebemittels durch den Auslassanschluss zu dem Tuch startet und stoppt;
einem Drückabschnitt (22, 25) der sich in der ersten Richtung relativ zu der Düse befindet und daran angepasst ist, einen Klebemittelabschnitt (431) an eine andere Tuchlage zu drücken, wobei der Klebemittelabschnitt ein Teil des Tuches ist, an dem das von dem Auslassanschluss ausgelassene Klebemittel aufgebracht wurde; und
einem ersten Vorschubsteuerabschnitt (201), der, wenn der Auslasssteuerabschnitt die Verarbeitung des Auslassens des Klebemittels gestoppt hat, einen Befehl zu dem Vorschubabschnitt abgibt, um dadurch den Vorschubabschnitt zum Vorschieben des Tuchs in der ersten Richtung bis zu einer Position zu veranlassen, an der der Drückabschnitt einen Endabschnitt (432) des Klebemittelabschnitts drückt.

2. Tuchfügegerät gemäß Anspruch 1, wobei
der Vorschubabschnitt daran angepasst ist, das Tuch sowohl in der ersten Richtung als auch in der zweiten Richtung (402) relativ zu der Düse vorzuschieben, wobei die zweite Richtung der ersten Richtung entgegengesetzt ist, und
das Tuchfügegerät des Weiteren einen zweiten Vorschubsteuerabschnitt (201) aufweist, der, nachdem der Drückabschnitt den Endabschnitt gedrückt hat, einen Befehl zu dem Vorschubabschnitt abgibt, um dadurch den Vorschubabschnitt zum Vorschieben des Tuchs in der zweiten Richtung bis zu einer spezifischen Position zu veranlassen, an der das durch den Auslassanschluss ausgelassene Klebemittel zumindest auf einen Teil eines spezifischen Bereichs einschließlich des Endabschnitts aufzubringen ist.

3. Tuchfügegerät gemäß Anspruch 2, wobei die spezifische Position in der ersten Richtung von einer Position getrennt ist, an der das durch den Auslassanschluss ausgelassene Klebemittel auf den Endabschnitt über eine Distanz aufzubringen ist, die auf der Grundlage einer Größe der Düse definiert ist.

4. Tuchfügegerät gemäß Anspruch 2 oder 3, des Weiteren mit:
einem Speicherabschnitt (202), der viele Kombinationen von Bedingungen speichert, wobei die vielen Kombinationen der Bedingungen jeweils eine Kombination einer ersten Vorschubbedingung, die durch den ersten Vorschubsteuerabschnitt zu dem Vorschubabschnitt abgegeben wird, und einer zweiten Vorschubbedingung sind, die durch den zweiten Vorschubsteuerabschnitt zu dem Vorschubabschnitt abgegeben wird; und
einem Spezifizierabschnitt (201), der als eine spezifische Kombination eine Kombination von den vielen Kombinationen der Bedingungen in dem Speicherabschnitt spezifiziert,
wobei der erste Vorschubsteuerabschnitt und der zweite Vorschubsteuerabschnitt jeweils Befehle zu dem Vorschubabschnitt auf der Grundlage der spezifischen Kombination abgeben, die durch den Spezifizierabschnitt spezifiziert ist.

## Revendications

1. Dispositif de collage de tissu (1) comprenant :
un injecteur (17) comportant un orifice de distribution (86) à travers lequel un adhésif peut être distribué ;
une partie d'alimentation (22, 25) qui est adaptée afin de délivrer un tissu (152) dans une première direction (401) par rapport à l'injecteur ;
une partie de commande de distribution (201) qui initie et arrête le processus de distribution de l'adhésif à travers l'orifice de distribution vers le tissu ;
une partie de pression (22, 25) qui est située dans la première direction par rapport à l'injecteur et qui est adaptée de manière à presser une partie adhérente (431) avec une autre couche de tissu, la partie adhérente étant une partie du tissu sur laquelle l'adhésif distribué à partir de l'orifice de distribution a été appliqué ; et
une première partie de commande d'alimentation (201) qui, lorsque la partie de commande de distribution a arrêté le processus de distribution de l'adhésif, délivre une instruction à la partie d'alimentation provoquant ainsi l'alimentation du tissu dans la première direction par la partie d'alimentation, jusqu'à une position dans laquelle la partie de pression presse la partie terminale (432) de la partie adhérente.

2. Dispositif de collage de tissu selon la revendication 1, dans lequel
la partie d'alimentation est adaptée afin de délivrer le tissu à la fois dans la première direction et une seconde direction (402) par rapport à l'injecteur, la seconde direction étant opposée à la première direction, et
le dispositif de collage de tissu comprend en outre une seconde partie de commande d'alimentation (201) qui, après que la partie de pression a pressé la partie terminale, délivre une instruction à la partie d'alimentation provoquant ainsi l'alimentation du tissu dans la seconde direction par la partie d'alimentation jusqu'à une position spécifiée dans laquelle l'adhésif distribué à travers l'orifice de distribution doit être appliqué sur au moins une partie d'une plage spécifiée comportant la partie terminale.

3. Dispositif de collage de tissu selon la revendication 2, dans lequel la position spécifiée est séparée suivant la première direction par rapport à une position dans laquelle l'adhésif distribué à travers l'orifice de distribution doit être appliqué sur la partie terminale d'une distance qui est définie sur la base d'une dimension de l'injecteur.

4. Dispositif de collage de tissu selon la revendication 2 ou 3, comprenant en outre :
une partie de mémorisation (202) qui mémorise une pluralité de combinaisons de conditions, les combinaisons de la pluralité de combinaisons de conditions étant chacune une combinaison d'une première condition d'alimentation délivrée par la première partie de commande d'alimentation à la partie d'alimentation et d'une seconde condition d'alimentation délivrée par la seconde partie de commande d'alimentation à la partie d'alimentation ; et
une partie de spécification (201) qui spécifie en tant que combinaison spécifique une combinaison parmi la pluralité de combinaisons de conditions mémorisées dans la partie de mémorisation,
dans lequel la première partie de commande d'alimentation et la seconde partie de commande d'alimentation délivrent respectivement des instructions à la partie d'alimentation sur la base de la combinaison spécifique spécifiée par la partie de spécification.
